# EUROPÄISCHE PATENTSCHRIFT

(11) **EP 4 036 777 B1**
(45) Veröffentlichungstag und Bekanntmachung des Hinweises auf die Patenterteilung: **17.09.2025**
(21) Anmeldenummer: 21214825.8
(22) Anmeldetag: 15.12.2021
(51) Int. Cl.: G06F 21/62, G08B 13/196, H04N 7/18

(54) **VORRICHTUNG UND VERFAHREN ZUR ERHEBUNG WENIGSTENS EINES BILDES UNTER WAHRUNG DER ANONYMITÄT EINER JEWEILS ERFASSTEN PERSON**
DEVICE AND METHOD FOR THE COLLECTION OF AT LEAST ONE IMAGE WHILE PRESERVING THE ANONYMITY OF A PERSON RECORDED IN EACH CASE
DISPOSITIF ET PROCÉDÉ DE COLLECTE D'AU MOINS UNE IMAGE TOUT EN PRÉSERVANT L'ANONYMAT DE CHAQUE PERSONNE ENREGISTRÉE

(30) Priorität: 29.01.2021 DE 102021102139
(43) Veröffentlichungstag der Anmeldung: 03.08.2022
(73) Patentinhaber: Nikola, Daniel, 76646 Bruchsal (DE); Diepstraten, Joachim, 2563 SL Den Haag (NL)
(72) Erfinder: Nikola, Daniel, 76646 Bruchsal (DE); Diepstraten, Joachim, 2563 SL Den Haag (NL)
(74) Vertreter: Christ, Niko

(56) Entgegenhaltungen:
- WINKLER THOMAS ET AL: "Sensor-level security and privacy protection by embedding video content analysis", 2013 18TH INTERNATIONAL CONFERENCE ON DIGITAL SIGNAL PROCESSING (DSP), IEEE, 1 July 2013 (2013-07-01), pages 1 - 6, XP032498559, ISSN: 1546-1874, [retrieved on 20131006], DOI: 10.1109/ICDSP.2013.6622726
- ASGHAR MAMOONA N ET AL: "Visual Surveillance Within the EU General Data Protection Regulation: A Technology Perspective", IEEE ACCESS, vol. 7, 13 May 2011 (2011-05-13), pages 111709 - 111726, XP011741619, DOI: 10.1109/ACCESS.2019.2934226
- DUFAUX FREDERIC ED - AGAIAN SOS S ET AL: "Video scrambling for privacy protection in video surveillance: recent results and validation framework", MOBILE MULTIMEDIA/IMAGE PROCESSING, SECURITY, AND APPLICATIONS 2011, SPIE, 1000 20TH ST. BELLINGHAM WA 98225-6705 USA, vol. 8063, no. 1, 13 May 2011 (2011-05-13), pages 1 - 14, XP060014106, DOI: 10.1117/12.883948

## Beschreibung

Die Erfindung betrifft ein Verfahren sowie eine Vorrichtung zur Erhebung wenigstens eines Bildes unter Wahrung der Anonymität einer jeweils erfassten Person, wobei das wenigstens eine Bild aus Pixeln besteht, die von einer optischen Einrichtung erzeugt werden und die Pixel einen Farbwert und einen Positionswert aufweisen, und das Bild personenbezogene und nicht-personenbezogene Daten aufweist, und eine Verfremdung des wenigstens einen aus den Pixeln erstellbaren Bildes durch eine Verfremdungseinheit erfolgt.

Der Markt für Überwachungs- und Smart Kameras wächst rasant. Stand 2019 gab es weltweit 770 Mio. verbaute Geräte, bis Ende des Jahres 2021 sollen laut einer Prognose von IHS Markit bereits über 1 Mrd. Kameras im Einsatz sein. Der Grund für den enormen Wachstum ist die technische Innovation, Bildsequenzen mit Hilfe von intelligenten Algorithmen auf (kommerziell) nutzbare Informationen analysieren zu können. Dabei ist das auslesbare Informations-Spektrum und der daraus ableitbare Mehrwert nahezu unbegrenzt: Im Einzelhandel werden über die optische Analyse von Kunden das Produktangebot und -Platzierung optimiert, Innenstädte werden über die automatisierte Erkennung von atypischem Verhalten sicherer gemacht oder Stadtverkehr durch Adaption an optische Mobilitätsmessung intelligent entzerrt.

Trotz des enormen Mehrwerts stehen Datenschützer dieser Entwicklung sehr kritisch gegenüber, denn eine optisch erkennbare Aufnahme einer Person stellt ohne Einwilligung einen signifikanten Eingriff in die Privatsphäre dar. Dies ist besonders dann als kritisch zu bewerten, wenn eine Aufnahme in der Praxis nicht vermieden werden kann oder besonders schutzbedürftige Menschen ohne Bewusstsein der eigenen Aufnahme erfasst werden (Menschen mit Behinderung, Kinder, u.v.m.).

Um den starken Wunsch nach Privatsphäre und die hierfür jeweils implementierten, lokalen Datenschutz-Gesetze zu respektieren, wird weltweit an diversen Anonymisierungs-Methoden geforscht. Dabei funktionieren alle bisherigen Verfahren nach demselben Prinzip: Es wird immer ein erkennbares Ausgangsbild erhoben, welches dann von einem Algorithmus auf sensible Stellen analysiert wird (sog. intelligente Detektion), um die erkannten Bereiche dann zielgerichtet über die unterschiedlichsten Methoden unkenntlich zu machen, beispielsweise Maskierung, Verfremdung, Verpixeln, etc. Das Ziel ist es hierbei, nur die sensiblen Stellen zu anonymisieren, um möglichst viel originale Bildfläche für das Treffen von Bildaussagen zu erhalten.

Konkret ist aus der DE 10 2019 295 221 A1 eine Vorrichtung zur Generierung anonymisierter Bilder vorbekannt, wobei in diesem Zusammenhang ein Überwachungsbereich mit einer Kamera überwacht wird. Die insoweit aufgenommenen Bilder werden einem sogenannten Bearbeitungsmodul übermittelt, das die insoweit generierten Überwachungsbilder anonymisiert, sodass eine auf einem Überwachungsbild dargestellte Person anonymisiert ist. Nachteil dieser vorbekannten Vorrichtung ist, dass bei dieser Lösung definitiv zunächst ein Klarbild der erfassten Personen entsteht, das erst anschließend verschlüsselt wird.

Dies gilt auch für den Gegenstand der Patentanmeldung DE 10 2017 215 283 A1. Auch bei dieser Anwendung aus dem Automotive-Bereich, verhält es sich so, dass mittels einer Kamera ein Bild aufgezeichnet wird, das dann zu einem späteren Zeitpunkt anonymisiert wird, sodass auch hier definitiv zunächst ein Klarbild entsteht, womit eine Person eindeutig identifiziert werden kann.

Gleiches gilt für die DE 10 2015 209 138 A1 sowie die DE 2013 019 488 A1.

Aus der DE 10 2008 007 199 A1 ist ein Überwachungssystem vorbekannt, bei dem eine Mehrzahl von Überwachungskameras einen zu überwachenden Bereich überwacht. Der von den Überwachungskameras aufgenommene Bild-Datenstrom wird dann an eine Zentraleinheit des Überwachungssystems überführt, so dass schon an dieser Stelle die Situation entstanden ist, dass personenbezogene Informationen erfasst und einer weiteren Auswertung zugeführt werden, auch wenn diese ggf. zu einem späteren Zeitpunkt unkenntlich oder nicht identifizierbar gemacht werden.

Auch beim Gegenstand der DE 10 2007 029 606 B3 wird ein sensibler Bereich per Video überwacht und in unterschiedlichen Ausschnitten aufgenommen. Anschließend wird ein vorgegebener Bereich des zu erfassenden Bereiches durch Referenzdaten überschrieben und schließlich in den aufgenommenen Videobildern unkenntlich gemacht. Auch hier ist die entscheidende Schwachstelle, dass zunächst einmal ein Videostrom mit entsprechenden Bildern entsteht, der anschließend so bearbeitet werden muss, dass etwa aufgezeichnete Personen erst nachträglich anonymisiert werden.

Ferner ist aus der EP 2 429 182 A2 ein Verfahren zur Unkenntlichmachung personenbezogener Daten einer Kamera vorbekannt. Die Patentanmeldung beschreibt die Zielsetzung, dass "erfasste Bilder bereits innerhalb einer Kamera in einer Weise zu verändern sind, dass ein Missbrauch personenbezogener Daten möglichst zuverlässig unterbunden werden kann". Dies wird hierbei dadurch erreicht, dass die vom Bildsensor der Kamera erfassten Originalbilder bei Detektion einer sensiblen Information zwar bereits innerhalb der Kamera unkenntlich gemacht werden, technisch jedoch trotzdem als Detektionsgrundlage auch hier ein Klarbild entsteht.

Somit handelt es sich im Ergebnis um eine nachträgliche Anonymisierung von bereits aus Bilddaten (Frames) zusammengesetzten Gesamtbildern.

Auch die DE 10 206 223 859 A1 offenbart eine Kamera, bei der ausschließlich maskierte Bilder gespeichert werden. Allerdings enthalten die von der Kamera gewonnen Rohdaten zunächst noch ein unmaskiertes Überwachungsbild, welches erst nachträglich durch ein Maskierungsmodul maskiert wird.

Aus der Veröffentlichung von Korshunov et al. (Korshunov, Pavel, and Touradj Ebrahimi. "Using warping for privacy protection in video surveillance." 2013 18th International Conference on Digital Signal Processing (DSP). IEEE, 2013) ist eine Warping-Anonymisierungsmethode vorbekannt. Das hierbei beschriebene Verfahren verzerrt Bilder und soll hiermit die auf den Bildern erfassten Personen unkenntlich machen. Letztlich handelt es sich hier aber auch um ein reversibles Verfahren um vorhandene Gesamtbilder nachgelagert zu verzerren, wobei die Verzerrung erst durch eine vorangeschaltete Detektion ausgelöst werden muss und die Verzerrung selbst nicht auf Einzelpixelebene angewendet werden kann.

Letztlich umreißt die Veröffentlichung von Frederic Dufaux (Dufaux, Frederic. "Video scrambling for privacy protection in video surveillance: recent results and validation framework." Mobile Multimedia/Image Processing, Security, and Applications 2011. Vol. 8063. International Society for Optics and Photonics, 2011) den Stand der Technik zu verschiedenen Anonymisierungsmethoden. Diese Zusammenfassung verdeutlicht noch einmal, dass alle bisherigen Methoden erst bei Auslösung einer Detektion, erkennbare Klarbilder nachgelagert anonymisieren.

Als insoweit einzige Ausnahme, empfiehlt das Patent US 6,067,399 A1, die Detektion sensibler Stellen in den Pixelstrom zu verlagern. Hierbei wird über eine Sensibilitätsanalyse für jedes Pixel anhand des Abgleichs der jeweiligen Pixelfarbe mit einer Hautfarben-Datenbank entschieden, ob dieser Pixel Teil eines späteren, sensiblen Bildbereichs (hier: Gesicht) ist. Stimmt dies überein, so wird der Farbwert des Pixels zurückgesetzt.

In der Praxis ist dieses Verfahren jedoch nicht zielführend, da eine zuverlässige Anonymisierung nicht erzielt werden kann.

Das Spektrum von Hautfarben ist nicht von allen Umgebungsfarben abgrenzbar. Darüber hinaus werden Alleinstellungsmerkmale, wie Augen, auffallende Erscheinungsmerkmale oder Bewegungsmuster nicht von der Anonymisierung erfasst.

Neben Anonymisierungsmechanismen sind auch Pseudo-Anonymisierungsmechanismen bekannt. Konkret ist aus DE 10 2017 214 463 A1 ein Überwachungssystem zur Bild- und/oder Tonüberwachung vorbekannt, bei dem ein Bildsensor zum Erfassen von Bildmaterial und/oder ein Mikrofon zum Erfassen von Tonmaterial eingesetzt wird. Dabei ist die Anordnung mit einem sogenannten Verschlüsselungsschaltkreis versehen, um die erfassten Bild- und/oder Tondaten reversibel zu verschlüsseln, wobei die Programmlogik des Verschlüsselungsschaltkreises, nach seiner erstmaligen Programmierung, keine Veränderung der verschlüsselten Daten mehr zulässt. Dabei werden demnach alle Informationen unverändert verschlüsselt, mit der Absicht, diese in einem technisch besser schützbaren Raum wieder zu entschlüsseln.

Aus der Publikation von Winkler et al. (Winkler, Thomas, and Bernhard Rinner. "Sensor-level security and privacy protection by embedding video content analysis." 2013 18th International Conference on Digital Signal Processing (DSP). IEEE, 2013) sind Anonymisierungsverfahren sowie Sicherheitsprozesse zum Schutz der Privatsphäre offenbart. Allerdings werden auch hier abgreifbare Daten erhoben bzw. gespeichert.

Weiterhin sind aus der Publikation von Ashgar et al. (Asghar, Mamoona N., et al. "Visual surveillance within the EU general data protection regulation: A technology perspective." IEEE Access 7 (2019): 111709-111726) unterschiedliche Anonymisierungsmethoden bei Erkennung von sensiblen Bildinformationen vorbekannt. Aber auch hier muss zur Anwendung der Anonymisierungsmethoden ein Bild oder zumindest eine erkennbare Teilbildfläche als Ausgangsinformationen erstellt werden bzw. vorliegen.

Letztlich sind in der Publikation von Frederic Dufaux (Dufaux, Frederic. "Video scrambling for privacy protection in video surveillance: recent results and validation framework." Mobile Multimedia/Image Processing, Security, and Applications 2011. Vol. 8063. SPIE, 2011) verschiedene Technologien zur Sicherung der Privatsphäre bei Video- und Bildaufnahmen beschrieben.

Im Ergebnis bestehen somit im Stand der Technik für Anonymisierungsmethoden insgesamt folgende Probleme:
1. Abgreifbare Detektionsgrundlage: Die Notwendigkeit eines erkennbaren Ausgangsbildes liegt darin, dass ein Algorithmus nur entscheiden kann, ob ein einzelner Pixel zu einem sensiblen Bildteil gehört, wenn der Pixel in Relation zu allen umliegenden Pixeln des Gesamtbildes analysiert wird. Wird nur ein isolierter Pixel betrachtet, ist es unmöglich zuverlässig zu definieren, ob dieser Bildpunkt zu einer sensiblen Fläche (Gesicht, Kennzeichen, etc.) gehört oder nicht. Dies liegt daran, dass jede Farbe unendlich oft in der Natur vorkommt und sensible Flächen keine einzigartigen Farbspektren belegen (Hautfarben, Augenfarben, etc.). Durch den kausalen Bedarf des Gesamtbildes besteht jedoch immer das Risiko, dass das erkennbare Bild mutwillig durch Dritte abgegriffen wird.
2. Detektionsrate: Nach derzeitigem Stand der Technik können Algorithmen nur mit einer Zuverlässigkeit von 90 bis 95% Gesichter auf Bildern erkennen. Das bedeutet, dass 5 bis 10% der erfassten Personen auf einem Bild nicht unkenntlich gemacht werden und das jeweils auf jedem einzelnen Bild einer Sequenz (sog. Frame). Kausal sinkt die Wahrscheinlichkeit, dass eine Person beim kompletten Bild-Durchlauf vollständig in ihrer Anonymität verbleibt.
3. Ausgelöste Anonymisierung: Durch die limitierte Rechenkapazität auf einer Kamera beschränken sich die meisten Anonymisierungsverfahren auf die Manipulation von Gesichtern. Dabei zeigen jedoch aktuelle Studien, dass Menschen bereits über die Analyse ihrer Bewegungsmuster eindeutig identifiziert werden können. Analoges gilt für die Identifikation durch auffallende Kleidung, Frisuren oder andere Erscheinungsmerkmale (Namensschild, Berufskleidung, Gepäck, etc.).
4. Umkehrbarkeit: In der Regel sind Manipulationsverfahren mathematisch umkehrbar und/oder mit Hilfe von künstlicher Intelligenz rekonstruierbar. Damit gelten die Anonymisierungsmethoden nach der DS-GVO als eine einfache Pseudonymisierung und sind faktisch mit Verschlüsselungen zu vergleichen.

In Summe kann in der Praxis also der aktuelle Stand der Technik die Privatsphäre von erfassten Personen nicht ausreichend schützen. Diese Sichtweise bestätigt auch die europaweit-einheitliche Datenschutz-Grundverordnung, kurz DSGVO. So wird nach Art. 6 Abs.1 Buchst. a DSGVO definiert, dass eine Person ohne ihre explizite Einwilligung optisch erkennbar auf einem Bild erfasst wird, eine nachträgliche Anonymisierung den eigentlichen, ersten Tatbestand nicht wieder reinwaschen kann. Das heißt, nutzen Unternehmen derartige Systeme in Europa, können Strafen von bis 4% des weltweiten Konzernumsatzes ausgelöst werden.

Ausgehend von dem zuvor umrissenen Stand der Technik und der ebenfalls umschriebenen datenschutzrechtlichen Problematik in Europa hat es sich die hier beschriebene Erfindung zur Aufgabe gemacht, ein Verfahren sowie eine Vorrichtung zur Erhebung von bereits unkenntlichen Bildern bereitzustellen, die zuvor genannten Probleme löst und den Anforderungen der Datenschutzrichtlinie gerecht wird.

Diese Aufgabe wird durch ein Verfahren gemäß dem geltenden Anspruch 1 gelöst. Weiterhin wird die Aufgabe durch eine Vorrichtung gemäß dem nebengeordneten Vorrichtungsanspruch 2 gelöst. Vorteilhafte Ausgestaltungen der Vorrichtung können den abhängigen Ansprüchen entnommen werden.

Insoweit vorgesehen ist ein Verfahren sowie eine Vorrichtung zur Erhebung wenigstens eines Bildes unter Wahrung der Anonymität einer jeweils erfassten Person, wobei das wenigstens eine Bild aus Pixeln besteht, die von einer optischen Einrichtung erzeugt werden und die Pixel wenigstens einen Farbwert und einen Positionswert aufweisen, und das Bild personenbezogene und nicht-personenbezogene Daten aufweist, und eine Verfremdung des wenigstens einen aus den Pixeln erstellbaren Bildes durch eine Verfremdungseinheit erfolgt.

Ein solches Verfahren ist erfindungsgemäß dadurch gekennzeichnet, dass ein von der Entfernung erfasster Personen abhängiger Prozentsatz von 30 bis 70 % der von der optischen Einrichtung erzeugten Pixel durch die Verfremdungseinheit vor der Erstellung des Bildes irreversibel und ohne Sensibilitätsanalyse auf personenbezogene Daten verfremdet werden, indem jeder Pixel anhand seines Positionswertes mit einer vordefinierten Positionswerttabelle abgeglichen und bei Übereinstimmung der innewohnende Farbwert zurückgesetzt wird, wobei die vordefinierte Positionswertetabelle so definiert ist, dass der Abstand zwischen den Pixeln mit nicht-zurückgesetzten Farbwerten größtmöglich ist, sodass zu keinem Zeitpunkt ein abgreifbares Rohbild und/oder Klarbild sondern lediglich ein verfremdetes Bild erstellt wird, aus dem keine personenbezogenen Daten auslesbar sind, jedoch nicht-personenbezogene Daten mittels mathematischer Analyseverfahren, insbesondere stochastischer Methoden, bestimmbar sind.

Diese pauschale Verfremdung der dem Pixel innewohnenden Farbinformation abhängig von dem Positionswert des Pixels ist einer Löschung der originalen, dem Pixel innewohnenden Information gleichzusetzen.

Wird die Information unabhängig von der dem Pixel innewohnenden Information gelöscht, kann die so gelöschte Information nicht mehr kausal zurückgerechnet werden. Damit kann also in dieser Ausführungsform durch Verfremdung der dem Pixel innewohnenden Information abhängig von dessen Positionswert sichergestellt werden, dass eine Rekonstruierung der zuvor vorliegenden Information ausgeschlossen ist.

Auslöser der Erfindung war das Forschungsergebnis, dass mittels stochastischer Methoden aus einem für die menschliche Wahrnehmung vollständig unkenntlichem Bild dennoch anonyme Informationen gewonnen werden können. Diese Innovation erlaubt, dass in einem Bild die anonymisierte Fläche nicht mehr minimiert werden muss, da die Größe der verbleibenden, optisch erkennbaren Bildfläche nicht länger relevant ist. Kausal entfällt die Notwendigkeit einer Detektion (Sensibilitätsanalyse) und damit die Notwendigkeit eines ersten erkennbaren Bildes. Technisch kann somit der Anonymisierungsmechanismus bereits im Pixelstrom zuverlässig implementiert werden, wodurch pauschal alle Pixel und damit das gesamte, daraus errechnete Bild frei von Sensibilitätsanalysen unkenntlich gemacht werden kann.

Mit anderen Worten: Mit dem erfindungsgemäßen Verfahren findet keine optisch erkennbare Aufnahme einer Person statt, die erst nachträglich anonymisiert wird und daher der Datenschutzrechtslinie nicht entspricht. Vielmehr wird bereits im Bildentstehungsverfahren, der von einer optischen Einrichtung erzeugte Pixelstrom durch das erfindungsgemäße Verfahren irreversibel und unabhängig einer Sensibilitätsbewertung vollumfänglich manipuliert, sodass das erste jemals aus dem Pixelstrom zusammengesetzte Bild bereits vollumfänglich über die gesamte Bildfläche unkenntlich ist. Das heißt, es können bereits auf dem ersten, zusammengerechneten Bild keine Personen optisch identifiziert werden.

Um aus den von vornherein unkenntlich erstellten Bildern dennoch etwaige Informationen auslesen zu können, sieht das Verfahren in einer vorteilhaften Ausgestaltung vor, dass mittels stochastischer Methoden noch eine Wahrscheinlichkeit über die unkenntlichen Bildinhalte getroffen werden kann. Ein greifbares Beispiel könnte hierbei die Analyse einer unkenntlich erfassten Person sein, deren Identität auf dem unkenntlichen Bild optisch nicht mehr offengelegt werden kann, stochastische Methoden aber eine Aussage über ihr wahrscheinliches Geschlecht erlauben. Für diese Aussage muss nur die Gesamtkorrelation der Daten bestehen, anders als bei einer Identität, bei der eine lokale Datenkorrelation und Informationsdichte nötig sind, um eine zutreffende Aussage machen zu können. Damit können anonyme Informationen bestimmt werden, nicht aber einer bestimmten Person zugeordnet werden. Somit können beispielsweise optische Frequenzdaten mit Geschlechtsinformationen erhoben oder Personenabstände zur Vermeidung von Infektionen optisch überwacht werden, bei gleichzeitiger Sicherstellung der Anonymität gezählter bzw. analysierter Personen.

Um die Unkenntlichkeit des aus den verfremdeten Pixeln erstellbaren Bildes weiter zu erhöhen, wird die Positionstabelle so definiert, dass der Abstand zwischen den nicht veränderten Pixeln, sprich ohne Rücksetzung des Farbwertes, größtmöglich ist.

Werden die Pixel(ketten) nun zu Bildern zusammengerechnet, ist das resultierende Bild bereits vollständig unkenntlich. Dieser Vorgang ist irreversibel. Der Ablauf der Anonymisierungsschritte kann in beliebiger Reihenfolge erfolgen. Die Erfindung betrifft auch eine Vorrichtung zur Ausführung des erfindungsgemäßen Verfahrens. Diese umfasst dabei eine optische Einrichtung und eine Verfremdungseinheit. Eine optische Einrichtung kann dabei beispielsweise ein CMOS- oder ein CCD-Lichtsensor sein. Solch ein Lichtsensor besteht aus vielen Bildsensorzellen mit Fotorezeptoren und wird häufig in Kameras verbaut. Fällt nun Licht durch eine Linse einer Kamera auf einen Fotorezeptor, so steigt in Abhängigkeit der jeweils auftreffenden Wellenlänge die Spannung in dejeweiligen Zelle. Da diese von der Wellenlänge und Intensität abhängige Spannungsänderung sehr gering ist, wird dieser sogenannte Delta-Wert für die Differenz-Messung verstärkt.

In einem nachgelagerten Schritt werden nun die vom Lichtsensor detektierten Spannungsänderungen von einem Bildsensor, auch Analog-Digital-Wandler genannt, zeilenweise bzw. reihenweise, je nachdem ob es sich bei dem Lichtsensor der optischen Einrichtung um einen CMOS- oder CCD-Lichtsensor handelt und übersetzt diese Spannungswerte in digitale Werte, die sogenannten Pixel. Mit anderen Worten: Es werden immer die Spannungswerte einer kompletten Rezeptoren-Zeile angefragt, um dann für diese "Charge" jede einzelne, ausgelesene Spannung in den jeweiligen Digital-Wert, also in Pixel, zu übersetzen. Dabei wird jede eintreffende Spannung (jeder Zelle) einzeln in einen digitalen Wert übersetzt und mit den nachfolgenden Werten der gleichen Zeile zu einer "Kette" aufgereiht. Diese Zeilenketten werden im Stand der Technik üblicherweise in einem Zwischenspeicher zu Bildern aufgereiht.

Dieser Moment der Aufreihung der Zeilenketten von Pixeln kann technisch als die Geburt des ersten gesamten Rohbildes verstanden werden. Dieses Rohbild wird im Anschluss für die Optimierung der Bildqualität oder zur Verfremdung etwaiger personenbezogener Daten durch unterschiedliche Algorithmen überarbeitet, beispielsweise Demosaik, Post-Filter, Dead-Pixel Removal etc. Zum Schluss kann das qualitativ hochwertige Bild in einem internen Speicher abgelegt werden.

In einer vorteilhaften Ausgestaltung der erfindungsgemäßen Vorrichtung weist diese eine Speichereinheit zum Speichern des wenigstens einen, aus den Pixeln erstellbaren Bildes auf. Vorteilhafterweise befindet sich die Verfremdungseinheit zwischen dem Bildsensor der optischen Einrichtung und dieser Speichereinheit. Durch die Anordnung kann sichergestellt werden, dass zu keinem Zeitpunkt ein kenntliches Bild erstellt, gespeichert oder abgegriffen werden kann.

Gemäß einem letzten Aspekt der Erfindung wird die erfindungsgemäße Vorrichtung zur Ausführung des erfindungsgemäßen Verfahrens in einer Kamera, insbesondere einer Digital-Kamera, beispielsweise einer Überwachungskamera, verwendet.

Die Erfindung wird nachfolgend anhand eines Ausführungsbeispiels näher erläutert.

Es zeigen
- Figur 1: einen schematischen Ablauf zur Erfassung eines Bildes mithilfe einer Kamera,
- Figur 2: einen schematischen Ablauf zur Verfremdung von erzeugten Pixeln, sowie
- Figur 3: einen schematischen Ablauf zur weiteren Verfremdung der aus Figur 2 bereits erzeugten und verfremdeten Pixeln.

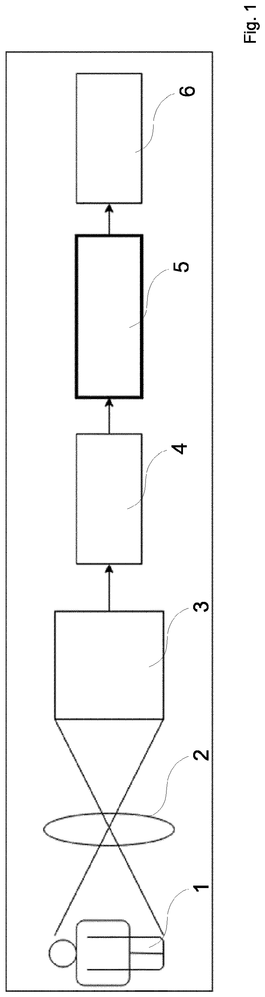

Figur 1 zeigt einen schematischen Ablauf einer Aufnahme eines Bildes 1 einer Person 1 mit Hilfe einer Linse 2 einer Kamera. Das durch die Linse 2 tretende und zum Teil gebündelte Licht wird insbesondere in Abhängigkeit von dessen Wellenlänge und Intensität von einem Bildsensor 3 erfasst und mittels einem Analog-Digital-Wandler 4 in digitale Werte, die sogenannten Pixel 7, umgewandelt. Diese so erzeugten Pixel 7 werden anschließend, bevor es zu einer Bildung eines Bildes 10 aus den so erzeugten digitalen Werten, also Pixeln 7, kommt, unmittelbar an die Verfremdungseinheit 5 übergeben. Die Verfremdungseinheit 5 verfremdet die Pixel 7 dabei derartig, dass aus einem daraus gebildeten Bild 10 keine Personen identifiziert, bzw. Alleinstellungsmerkmale ausgelesen werden können. Das so irreversibel verfremdete, aus den verfremdeten Pixeln bildbare Bild kann anschließend nach Erstellung desselben in einer Speichereinheit 6 abgelegt werden. Somit ist zu jeder Zeit sichergestellt, dass zu keinem Zeitpunkt ein erkennbares digitales Bild, bzw. sensible Informationen, in einer Speichereinheit abgegriffen werden können.

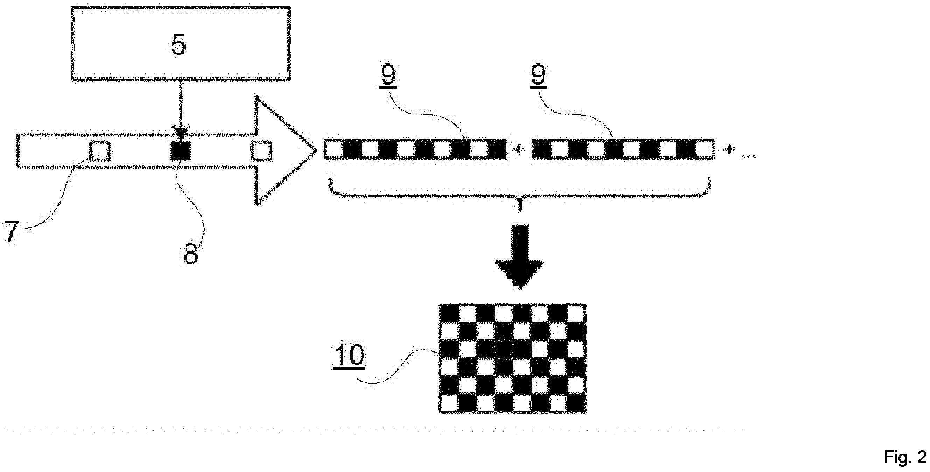

Figur 2 zeigt dabei schematisch eine vorteilhafte Ausgestaltung eines Verfahrens zur Verfremdung etwaiger durch den Bildsensor 3 erfasster und in dem Analog-Digital-Wandler 4 erzeugter Pixel 7.

Jeder einzelne, vom Analog-Digital-Wandler 4 kommende, digitale Pixel 7 hat hierbei zwei Informationen: Einen Farb- und einen Positionswert. Die vom Bildsensor erfassten und vom Analog-Digital-Wandler erzeugten Pixel 7 werden anschließend an die Verfremdungseinheit 5 übergeben, die in dem in Figur 2 dargestellten Verfahren jeden zweiten Pixel 7, also 50 % der bei der Verfremdungseinheit 5 ankommenden Pixel 7, verfremdet, indem hier der Farbwert zurückgesetzt wird. Mit anderen Worten: Jeder einzelne, vom Analog-Digital-Wandler 4 kommende Pixel 7 wird einzeln abgefangen, bevor dieser in die jeweils zugehörige Pixelkette 9 zur Erstellung eines Bildes 10 hinzugefügt wird, und wird anhand dessen Positionswerts bewertet. Durch das Entfernen der ursprünglichen, dem Pixel 7 innewohnenden Information, hier dem Farbwert, kann die gelöschte Information nicht mehr kausal zurückgerechnet werden. Somit ist dieses pauschale Umstellen einer Pixelfarbe aufgrund seines Positionswerts einer Löschung der originalen Information gleichzusetzen. Die Pixel 7 ohne zurückgesetzten Farbwert und die farbwertzurückgesetzten Pixel 8 können anschließend in Pixelketten 9 aneinandergereiht und diese wiederum zu einem Bild 10 aufgereiht werden. Ein aus diesen irreversibel verfremdeten Pixeln 7, 8 erstellbares Bild 10 ist in Figur 2 exemplarisch dargestellt.

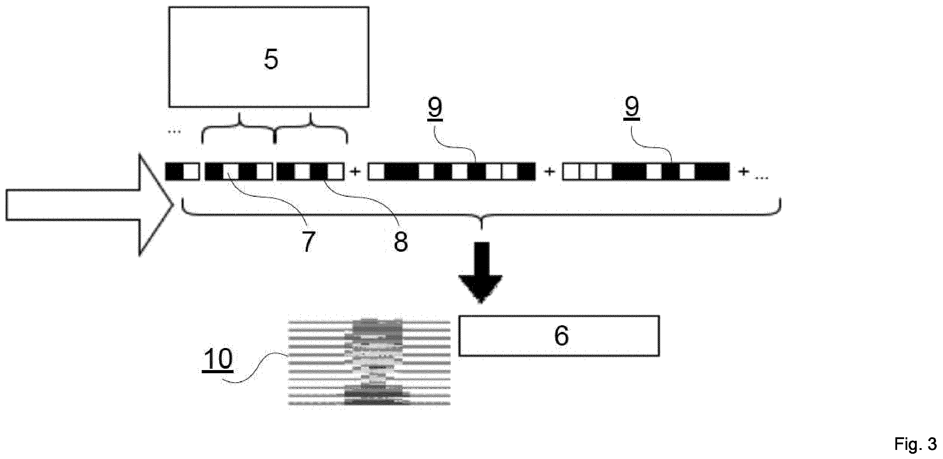

Figur 3 zeigt einen weiteren vorteilhaften Schritt der Verfremdung von gemäß obigem Verfahren erzeugten Pixeln 7, 8 bzw. Pixelketten 9. Die mittels der Verfremdungseinheit 5 erzeugten Pixel 7, 8 bzw. Pixelketten 9, die sich aus farbwertzurückgesetzten Pixeln 8 und nicht-farbwertzurückgesetzten Pixeln 7 aufbauen, können in einem weiteren Schritt durch die Verfremdungseinheit 5 weiter verfremdet werden. Hierfür wird eine bestimmte Anzahl von den ankommenden Pixeln 7, 8 bzw. Pixeln 7, 8 in den Pixelketten 9, hier 4er-Ketten, irreversibel miteinander vermischt, beziehungsweise neu angeordnet. Konkret hat dies zur Folge, dass für eine bestimmte Anzahl von ankommenden Pixeln 7, 8 bzw. Pixelketten 9 die Pixel mit einer nicht inversen Funktion multipliziert und die Pixel mit ihrer Originalfarbe anhand der Größe der Ergebnisse neu angeordnet werden.

Wird dies für alle bei der Verfremdungseinheit 5 ankommenden Pixel 7, 8 bzw. Pixelketten 9 durchgeführt, wird eine Vielzahl von Pixelketten erhalten, die irreversibel gemischt sind, aus denen wiederum ein Bild 10 erstellt und in einer Speichereinheit 6 abgespeichert werden kann.

Die Reihenfolge der beiden Schritte kann dabei geändert werden.

Somit ist vorstehend ein Verfahren sowie eine Vorrichtung zur Ausführung eines erfindungsgemäßen Verfahrens offenbart, mit dem eine datenschutzrechtlich konforme Aufnahme eines Bildes unter Wahrung der Anonymität einer jeweils aufgenommenen Person gewährleistet wird.

Die Vorteile des erfindungsgemäßen Verfahrens, sowie der erfindungsgemäßen Vorrichtung gegenüber dem Stand der Technik, können kurz wie folgt zusammengefasst werden.
**(1) Keine abgreifbare Detektionsgrundlage:** Eine abgreifbare Bildgrundlage wird vollständig vermieden, getreu dem Motto: Der beste Schutz sensibler Daten ist, diese erst gar nicht entstehen zu lassen.
**(2) Detektionsrate:** Jeder Frame wird bereits in der Entstehung manipuliert. Dabei wird auf eine aktive Detektion bewusst verzichtet, so frei von Entscheidungsfehlern eine Anonymisierung von 100% der Sequenzbilder sichergestellt ist.
**(3) Flächendeckende Anonymisierung:** Unter Einsatz des erläuterten Verfahrens wird konstant das komplette Bild anonymisiert. Somit kann eine Person durch Betrachtung des Bildes nicht identifiziert werden.
(4) **Umkehrbarkeit:** Die Anonymisierungsschritte sind irreversibel. Das heißt, selbst bei Vorlage der Algorithmen kann der unkenntliche Bildoutput nicht zurück gerechnet werden.

### BEZUGSZEICHENLISTE

- 1: Person
- 2: Linse
- 3: Bildsensor
- 4: Analog-Digital-Wandler
- 5: Verfremdungseinheit
- 6: Speichereinheit
- 7: Pixel
- 8: Farbwertzurückgesetzter Pixel
- 9: Pixelkette
- 10: Bild

## Patentansprüche

1. Verfahren zur Erhebung wenigstens eines Bildes unter Wahrung der Anonymität einer jeweils erfassten Person (1), wobei das wenigstens eine Bild (10) aus Pixeln (7) besteht, die von einer optischen Einrichtung erzeugt werden und die Pixel (7) wenigstens einen Farbwert und einen Positionswert aufweisen, und das Bild (10) nur noch mittels mathematischer Analyseverfahren einen Rückschluss auf Informationen zulässt, die jeweils nicht einer konkreten Person (1) zugeordnet werden können, und eine Verfremdung des wenigstens einen aus den Pixeln (7) erstellbaren Bildes (10) durch eine Verfremdungseinheit (5) erfolgt,
**dadurch gekennzeichnet, dass** ein von der Entfernung erfasster Personen (1) abhängiger Prozentsatz von 30 bis 70 % der von der optischen Einrichtung erzeugten Pixel (7) durch die Verfremdungseinheit (5) vor der Erstellung des Bildes (10) irreversibel und ohne Sensibilitätsanalyse auf personenbezogene Daten verfremdet werden, indem jeder Pixel anhand seines Positionswertes mit einer vordefinierten Positionswerttabelle abgeglichen und bei Übereinstimmung der innewohnende Farbwert zurückgesetzt wird, wobei die vordefinierte Positionswertetabelle so definiert ist, dass der Abstand zwischen den Pixeln (7) mit nicht-zurückgesetzten Farbwerten größtmöglich ist, sodass zu keinem Zeitpunkt ein abgreifbares Rohbild und/oder Klarbild sondern lediglich ein verfremdetes Bild erstellt wird, aus dem keine personenbezogenen Daten auslesbar sind, jedoch nicht-personenbezogene Daten mittels mathematischer Analyseverfahren, insbesondere stochastischer Methoden, bestimmbar sind.

2. Vorrichtung zur Ausführung eines Verfahrens nach Anspruch 1, umfassend wenigstens eine optische Einrichtung und eine Verfremdungseinheit (5).

3. Vorrichtung nach Anspruch 2,
**dadurch gekennzeichnet, dass** die optische Einrichtung einen Bildsensor (3) zur Erzeugung von Pixeln (7) mit wenigstens einem Farbwert und einem Positionswert aufweist.

4. Vorrichtung nach einem der Ansprüche 2 oder 3, **dadurch gekennzeichnet, dass** diese eine Speichereinheit (6) zum Speichern des wenigstens einen, aus den Pixel (7) erstellbaren Bildes (10) aufweist.

5. Vorrichtung nach Anspruch 4, **dadurch gekennzeichnet, dass** die Verfremdungseinheit (5) zwischen dem Bildsensor (3) der optischen Einrichtung und der Speichereinheit (6) angeordnet ist.

6. Verwendung einer Vorrichtung nach einem der vorhergehenden Ansprüche 2 bis 5 in einer Kamera.

## Claims

1. Method for capturing at least one image while maintaining the anonymity of a person (1) captured in each case, wherein the at least one image (10) consists of pixels (7) generated by an optical device and the pixels (7) have at least one color value and one position value, and the image (10) only allows conclusions to be drawn about information that cannot be assigned to a specific person (1) by means of mathematical analysis methods, and an alteration of the at least one image (10) that can be created from the pixels (7) by an alienation unit (5),
**characterized in that** a percentage of 30 to 70% of the pixels (7) generated by the optical device, depending on the distance of the persons (1) detected, are irreversibly alienated by the alienation unit (5) before the image (10) is created, irreversibly and without sensitivity analysis of personal data, by comparing each pixel with a predefined position value table based on its position value and, if there is a match, resetting the inherent color value, wherein the predefined position value table is defined such that the distance between the pixels (7) with non-reset color values is as large as possible, so that at no time is a detectable raw image and/or clear image created, but only an altered image from which no personal data can be read, although non-personal data can be determined by means of mathematical analysis methods, in particular stochastic methods.

2. Device for carrying out a method according to claim 1, comprising at least one optical device and an alienation unit (5).

3. Device according to claim 2, **characterized in that** the optical device has an image sensor (3) for generating pixels (7) with at least one color value and one position value.

4. Device according to one of claims 2 or 3, **characterized in that** it has a storage unit (6) for storing the at least one image (10) that can be created from the pixels (7).

5. Device according to claim 4, **characterized in that** the distortion unit (5) is arranged between the image sensor (3) of the optical device and the memory unit (6).

6. Use of a device according to one of the preceding claims 2 to 5 in a camera.

## Revendications

1. Procédé pour enregistrer au moins une image tout en préservant l'anonymat d'une personne (1) capturée, dans lequel la au moins une image (10) est constituée de pixels (7) qui sont générés par un dispositif optique et les pixels (7) présentent au moins une valeur de couleur et une valeur de position, et l'image (10) ne permet plus, qu'au moyen de procédés d'analyse mathématique, de tirer des conclusions sur des informations qui ne peuvent pas être attribuées à une personne concrète (1), et une altération de la au moins une image (10) pouvant être générée à partir des pixels (7) par une unité de déformation (5),
**caractérisé en ce qu'un** pourcentage de 30 à 70 % des pixels (7) générés par le dispositif optique, qui dépend de la distance à laquelle se trouve la personne (1) détectée, est déformé de manière irréversible et sans analyse de sensibilité des données à caractère personnel par l'unité de déformation (5) avant la création de l'image (10) de manière irréversible et sans analyse de sensibilité des données à caractère personnel, en comparant chaque pixel à l'aide de sa valeur de position avec un tableau de valeurs de position prédéfini et en réinitialisant la valeur de couleur inhérente en cas de correspondance, le tableau de valeurs de position prédéfini étant défini de telle sorte que la distance entre les pixels (7) avec des valeurs de couleur non réinitialisées soit la plus grande possible, de sorte qu'à aucun moment une image brute et/ou une image claire ne puisse être obtenue, mais uniquement une image altérée à partir de laquelle aucune donnée à caractère personnel ne peut être lue, mais des données non personnelles peuvent être déterminées à l'aide de procédés d'analyse mathématique, en particulier de méthodes stochastiques.

2. Dispositif pour la mise en œuvre d'un procédé selon la revendication 1, comprenant au moins un dispositif optique et une unité de modification (5).

3. Dispositif selon la revendication 2, **caractérisé en ce que** le dispositif optique comprend un capteur d'images (3) pour générer des pixels (7) avec au moins une valeur de couleur et une valeur de position.

4. Dispositif selon l'une des revendications 2 ou 3, **caractérisé en ce qu'**il comprend une unité de mémoire (6) pour enregistrer au moins une image (10) pouvant être créée à partir des pixels (7).

5. Dispositif selon la revendication 4, **caractérisé en ce que** l'unité de déformation (5) est disposée entre le capteur d'image (3) du dispositif optique et l'unité de mémoire (6).

6. Utilisation d'un dispositif selon l'une des revendications 2 à 5 précédentes dans un appareil photo.
